# EUROPEAN PATENT SPECIFICATION

(11) **EP 3 236 294 B1**
(45) Date of publication and mention of the grant of the patent: **27.11.2024**
(21) Application number: 17163487.6
(22) Date of filing: 29.03.2017
(51) Int. Cl.: G01V 5/00

(54) **CONTAINER CT INSPECTION SYSTEM**
CT-INSPEKTIONSSYSTEM FÜR BEHÄLTER
SYSTÈME D'INSPECTION CT DE RÉCIPIENT

(30) Priority: 29.03.2016 CN 201610186955
(43) Date of publication of application: 25.10.2017
(73) Proprietor: Nuctech Company Limited, TongFang Building Shuangqinglu Haidian District Beijing 100084 (CN); Tsinghua University, Haidian District, Beijing 100084 (CN)
(72) Inventor: LI, Jianmin, Beijing 100084 (CN); LI, Yulan, Beijing 100084 (CN); ZHANG, Li, Beijing 100084 (CN); LI, Liang, Beijing 100084 (CN); ZONG, Chunguang, Beijing 100084 (CN); YU, Hao, Beijing 100084 (CN); KANG, Kejun, Beijing 100084 (CN); LI, Yuangjing, Beijing 100084 (CN); CHEN, Zhiyiang, Beijing 100084 (CN); MIATO, Qitian, Beijing 100084 (CN); CHENG, Jianping, Beijing 100084 (CN)
(74) Representative: Meissner Bolte Partnerschaft mbB

(56) References cited:
- EP-A1- 2 884 269
- EP-A2- 2 865 335
- US-A- 4 207 470
- US-A1- 2007 003 003
- US-A1- 2011 058 646
- US-A1- 2011 103 548
- US-A1- 2011 206 179
- US-A1- 2012 076 257

## Description

### Field of the Invention

The present invention relates to the field of container inspection equipment, and in particular to a container CT inspection system.

### Background of the Invention

In the prior art, a transmission type container inspection system can well inspect suspicious objects in a container, but the false detection rate is higher, and thus the customs have done a lot of unnecessary out of box audit. A CT container inspection system can provide three-dimensional images, and can identify substances, so that the false detection rate can be greatly reduced.

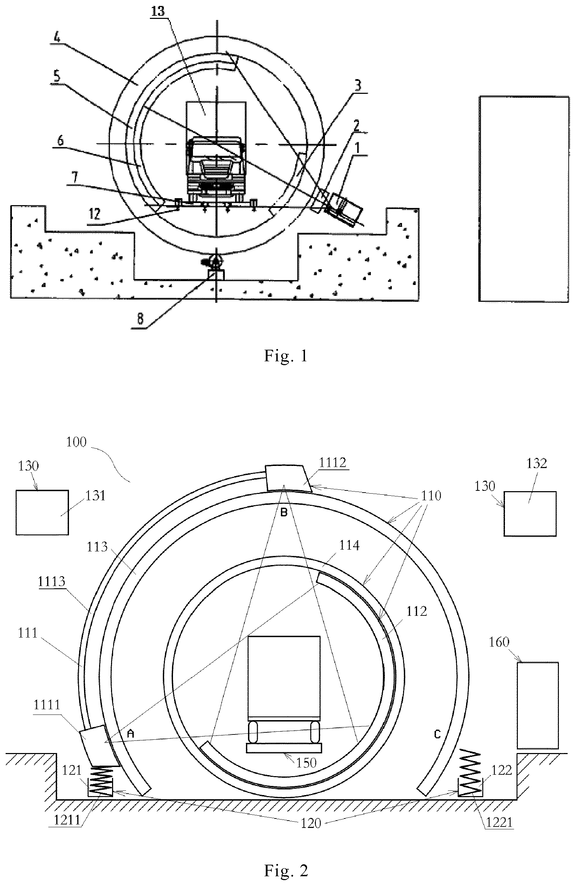

The invention patent application with the publication number of CN1779448A discloses a container inspection system having a CT tomography function, which can be used as a transmission imaging system with a single view angle. When a suspicious object is found, CT scanning is performed in the vicinity of the suspicious object. Fig. 1 shows a structural schematic diagram of the container inspection system.

As shown in Fig. 1, a scanning device of the container inspection system includes a radiation source 1, a corrector 2, a front collimator 3, a ring-shaped rotating frame 4, a detector array 5, a rear collimator 6, a transmission device 7, a driving device 8, a braking device 12, a brake and a hydraulic cylinder. The mark 13 in Fig. 1 represents container inspection vehicle.

The ring-shaped rotating frame 4 of the container inspection system is a large rotatable circular ring, the radiation source 1 and the detector array 5 are fixed on the ring-shaped rotating frame 4, and the ring-shaped rotating frame 4 is rotated unidirectionally for scanning. In a process of implementing the present invention, the designer of the present invention finds out that the prior art has the following disadvantages:
1. The diameter of the ring-shaped rotating frame 4 is very large, and the load born is very large and reaches a few tons or even a dozen tons, so the processing is difficult.
2. In order to locate an inspected vehicle near the ground level, a deep pit needs to be dug to install the ring-shaped rotating frame 4, resulting in high cost and difficult installation.
3. The radiation source 1 and the detector array 5 are installed on the ring-shaped rotating frame 4, power supply cables, control cables and the like of the radiation source 1 and the detector array 5 need to be connected to the outside, while the ring-shaped rotating frame 4 is continuously rotated, so it is very difficult to reliably connect these cables.
4. An accelerator of the radiation source 1 needs to use a water chilling unit. The water chilling unit is very difficult to work normally when being inverted, so it is difficult to place the water chilling unit on the ring-shaped rotating frame 4; and the accelerator and the water chilling unit are connected with water pipes, while the ring-shaped rotating frame 4 drives the accelerator to rotate, so it is difficult to place the water chilling unit at the outside of the ring-shaped rotating frame 4.
5. A radiation source device including the radiation source 1 is relatively heavy, and the manufacturing cost of a ring-shaped rotating frame 4 capable of fixing the radiation source device and capable of rotating is high.

The invention patent application with the publication number of US2012/0076257A1 discloses a radiation scanning of objects for contraband. In one example, a scanning system for examining contents of an object is disclosed comprising a frame encompassing, at least in part, a first interior region, a robotic arm movably supported by the frame, and a radiation source to generate a radiation beam to examine an object, the radiation source being pivotally coupled to the robotic arm. A detector is positioned and configured to encompass, at least in part, a second interior region within the first interior region, to detect radiation after interaction with the object. A conveying system moves the object, at least in part, through the second interior region. The frame and the robotic arm are configured to move the radiation source at least partially around the object to be examined and the robotic arm is configured to pivot the radiation source to aim the source toward the object.

The invention patent application with the publication number of US2011/0206179A1 discloses a multi-view cargo scanner. The invention provides a multi-view X-ray inspection system. In one embodiment, a beam steering mechanism directs the electron beam from an X-ray source to multiple production targets which generate X-rays for scanning which are subsequently detected by a plurality of detectors to produce multiple image slices (views). The system is adapted for use in CT systems. In one embodiment of a CT system, the X-ray source and detectors rotate around the object covering an angle sufficient for reconstructing a CT image and then reverse to rotate around the object in the opposite direction. The inspection system, in any configuration, can be deployed inside a vehicle for use as a mobile detection system.

The invention patent application with the publication number of US2007/0003003A1 discloses a radiation scanning of objects for contraband. In one example, a scanning unit for examining contents of a cargo container is disclosed comprising a first path through the scanning unit for transport of a cargo container and one or more sources of respective beams of radiation. At least one of the one or more sources are movable across a second path transverse to the first path. The second path extends partially around the first path. The scanning unit further comprises a detector extending partially around the first path. The detector is positioned to detect radiation interacting with the cargo container during scanning, such as radiation transmitted through the container. The at least one source and the detector are positioned so that the cargo container is transportable along the first path, between the source and the detector. A transport system may be provided to convey the object through the scanning unit, along the first path.

EP2865335A2 disclosures a scanning system for three-dimensional imaging including a bench, a gantry frame, a light source, a sensor and a control unit. The bench is to support a subject to be scanned. The gantry frame is movably mounted at a lateral side of the bench. The light source is movably mounted on the gantry frame so as to emit a light for a radiographic purpose. The sensor is movably mounted at a side of the bench, by opposing to the subject with respect to the bench, so as to receive the light emitted from the light source. The control unit is electrically coupled with the gantry frame, the light source and the sensor so as thereby to perform motion controls upon the gantry frame, the light source and the sensor.

### Summary of the Invention

The objective of the present invention is to provide a container CT inspection system for solving the technical problem that it is difficult to process and install a ring-shaped rotating frame bearing heavy load for supporting a radiation source device.

The present invention provides a container CT inspection system according to claim 1, including a scanning device, wherein the scanning device includes a radiation source device and a detector array, the scanning device further includes a first rail and a second rail, which are respectively arranged on outer layer and inner layer, the radiation source device is arranged on the first rail, and the detector array is arranged on the second rail; wherein the first rail is fixedly arranged, the radiation source device is configured to swing to and fro along the first rail; the second rail is fixedly arranged, and the detector array is configured to swing to and fro along the second rail together with the radiation source device; and wherein the radiation source device and the detector array are configured to move synchronously and are free of rigid connection with each other.

In some embodiments, the container CT inspection system includes a first driving device configured to drive the radiation source device to move and a second driving device configured to drive the detector array to move.

In some embodiments, the first driving device is arranged on the first rail or the radiation source device, and/or the second driving device is arranged on the second rail or the detector array.

In some embodiments, the container CT inspection system includes a controller and a detection device, the detection device is configured to detect motion information of the radiation source device or the detector array, the detection device, the first driving device and the second driving device are connected with the controller, wherein the controller controls the first driving device to drive the radiation source device to move according to the detection information or the controller controls the second driving device to drive the detector array to move according to the detection information.

In some embodiments, the detection device includes a first sensor configured to detect the position of the radiation source device and a second sensor configured to detect the position of the detector array, the controller controls the first driving device to drive the radiation source device to move according to the detection information sent by the first sensor, and controls the second driving device to drive the detector array to move according to the detection information sent by the second sensor.

In some embodiments, the first sensor is arranged on the first rail, and the second sensor is arranged on the second rail.

In some embodiments, the first rail is an arc-shaped rail with an opening on the bottom or an annular rail.

In some embodiments, the radiation source device includes a plurality of radiation sources arranged along the first rail at intervals, and the plurality of radiation sources carry out synchronous motion.

In some embodiments, emission time of each of the plurality of radiation sources is different from emission time of the rest.

In some embodiments, the plurality of radiation sources include a first radiation source and a second radiation source, the radiation source device further includes a connecting device, and the first radiation source and the second radiation source are fixedly connected by the connecting device.

In some embodiments, the angle between the first radiation source and the second radiation source relative to the center of the first rail is in the range of 70° to 130°.

In some embodiments, the container CT inspection system further includes a buffer device, and the buffer device includes a first elastic device and a second elastic device, which are respectively arranged on two bottommost ends of a motion path of the radiation source device.

In some embodiments, the radiation source device is configured to emit rays with different energy.

In some embodiments, the radiation source device includes a plurality of radiation sources arranged along the first rail at intervals, and at least one radiation source in the plurality of radiation sources is configured to emit rays with different energy.

In some embodiments, the container CT inspection system further includes auxiliary equipment connected with the radiation source device, the auxiliary equipment includes a high voltage power supply and/or a water chilling unit, and the auxiliary equipment is arranged at the outside of the scanning device.

In some embodiments, the container CT inspection system further includes a traction device configured to convey an inspected container, and the traction device passes through the interiors of the first rail and the second rail and has intervals with the motion paths of the radiation source device and the detector array.

In some embodiments, a rail side of the first rail and the rail side of the second rail are located on two concentric circles.

Based on the container CT inspection system provided by the present invention, the first rail and the second rail, which are respectively arranged on outer layer and inner layer, are provided, the radiation source device is arranged on the first rail, and the detector array is arranged on the second rail, so that the radiation source device and the detector array are respectively supported by different rails, which improves the situation that ring-shaped rotating frame in the prior art needs to bear a very large load, and for each rail in the first rail and the second rail, the strength requirements are greatly reduced relative to ring-shaped rotating frame, therefore the processing difficulty and the installation difficulty are effectively reduced compared with the container CT inspection system in the prior art.

Other features and advantages of the present invention will become apparent from the following detailed description of exemplary embodiments of the present invention with reference to the accompanying drawings.

### Brief Description of the Drawings

The accompanying drawings described herein are used for providing a further understanding of the present invention and form a part of the present application, the schematic embodiments of the present invention and illustration thereof are used for explaining the present invention and do not constitute an improper limitation to the present invention. In the accompanying drawings:
Fig. 1 is a structural schematic diagram of a container CT inspection system in the prior art.
Fig. 2 is a structural schematic diagram of a container CT inspection system in a specific embodiment of the present invention.

### Detailed Description of the Embodiments

A clear and complete description of technical solutions in the embodiments of the present invention will be given below, in combination with the accompanying drawings in the embodiments of the present invention. Apparently, the embodiments described below are merely a part, but not all, of the embodiments of the present invention. The following description of at least one exemplary embodiment is in fact merely illustrative and is in no way intended as a limitation to the present invention and its application or use.

Unless stated otherwise, the relative arrangement of components and steps set forth in these embodiments, numerical expressions and numerical values do not limit the scope of the present invention. At the same time, it will be appreciated that the dimensions of various parts shown in the accompanying drawings are not drawn to scale in actuality for the convenience of description. The techniques, methods and equipment known to those of ordinary skill in the relevant art may not be discussed in detail, but the techniques, the methods and the equipment, as appropriate, should be considered as a part of the authorized specification. In all the examples shown and discussed herein, any specific value should be construed as merely exemplary and not as limiting. Thus, other examples of the exemplary embodiments may have different values. It should be noted that similar reference signs and letters designate similar items in the following accompanying drawings, and thus, once a certain item is defined in one of the accompanying drawings, it is not further discussed in the subsequent accompanying drawings necessarily.

For the convenience of description, spatially relative terms, such as "on", "above", "on an upper surface", "over" and the like may be used herein to describe the spatial positional relationship of one device or feature with other devices or features in the figures. It should be understood that the spatially relative terms are intended to encompass different orientations in use or operation other than the described orientations of the devices in the figures. For example, if the devices in the figures are inverted, it is described as that devices "above other devices or structures" or "over the other devices or structures" are located to be "below the other devices or structures" or "under the other devices or structures". Thus, the exemplary term "above" can include two orientations of "above" and "below". The device can also be located in other different ways (be rotated for 90 degrees or located in other orientations), and the relative description of the space used here is explained accordingly.

Fig. 2 is a structural schematic diagram of a container CT inspection system in a specific embodiment of the present invention.

As shown in Fig. 2, the container CT inspection system 100 in the embodiment includes a scanning device 110, a buffer device 120, auxiliary equipment 130, a traction device 150 and a control room 160.

The scanning device 110 includes a radiation source device 111 and a detector array 112, as well as a first rail 113 and a second rail 114, which are respectively arranged on outer layer and inner layer, the radiation source device 111 is arranged on the first rail 113, and the detector array 112 is arranged on the second rail 114.

The first rail 113 and the second rail 114, which are respectively arranged on outer layer and inner layer, are provided, the radiation source device 111 is arranged on the first rail 113, and the detector array 112 is arranged on the second rail 114, so that the radiation source device 111 and the detector array 112 are respectively supported by different rails, the load, which is originally born by a ring-shaped rotating frame independently, is allocated to the first rail 113 and the second rail 114 to be respectively born, thereby improving the situation that the ring-shaped rotating frame needs to bear a very large load, and for each rail in the first rail 113 and the second rail 114, the strength requirements are greatly reduced relative to the ring-shaped rotating frame, therefore the processing difficulty and the installation difficulty are effectively reduced compared with the container CT inspection system in the prior art.

The detector array 112 and the radiation source device 111 move synchronously. The detector array 112 and the radiation source device 111 move synchronously, for example, the detector array 112 is controlled to move with the radiation source device 111, a ray beam generated by the radiation source device 111 can consistently cover the same position on the detector array 112, which is conducive to guaranteeing the detector array 112 to receive the ray beams generated by the radiation source device 111 and guaranteeing the successful implementation of a scanning function of the scanning device 110.

As shown in Fig. 2, according to the claimed invention, the first rail 113 is an outer rail located on an outer side of the second rail 114, and the second rail 114 is an inner rail. The detector array 112 is flatter than the radiation source device 111, this setting is beneficial for the layout of the radiation source device 111 and the detector array 112, and is conducive to reducing the sizes and weights of the first rail 113 and the second rail 114 and reducing the space occupied by the scanning device 110.

Preferably, a rail side of the first rail 113 and the rail side of the second rail 114 are located on two concentric circles. The rail side of the first rail 113 is a radial outer side of the first rail 113, and the rail side of the second rail 114 is a radial inner side of the second rail 114. The setting is easy to guarantee the synchronization of the detector array 112 and the radiation source device 111.

Preferably, the detector array 112 is circular arc-shaped on the whole. An outer arc diameter of the detector array 112 is equal to the diameter (an inner circle diameter) of the rail side of the second rail 114 or is slightly smaller than the diameter of the rail side of the second rail 114, so that the detector array 112 is installed on the second rail 114 or moves relative to the second rail 114, and it is also conducive to saving the space occupied by the scanning device 110.

According to the claimed invention, the radiation source device 111 and the detector array 112 move synchronously and are free of rigid connection with each other. If the radiation source device 111 and the detector array 112 are in rigid connection, the synchronous motion thereof will be implemented more easily in fact, but the radiation source device 111 and the detector array 112 will necessarily influence each other, such that the loads respectively born by the first rail 113 and the second rail 114 are difficult to completely separate or difficult to determine. Since the radiation source device 111 and the detector array 112 are free of rigid connection, the overload risk of the first rail 113 or the second rail 114 can be prevented.

The container CT inspection system 100 includes a first driving device configured to drive the radiation source device 111, and the first driving device can be arranged on the first rail 113 and can also be arranged on the radiation source device 111. The setting mode saves the energy configured to drive the radiation source device 111 to rotate.

The container CT inspection system 100 includes a second driving device configured to drive the detector array 112. The second driving device can be arranged on the second rail 114 and can also be arranged on the detector array 112. The setting mode saves the energy configured to drive the detector array 112 to rotate.

In the present embodiment, the second rail 114 is an annular rail. The setting is beneficial for the detector array 112 to detect the energy of the radiation source device 111 on the entire circumference.

To better achieve the synchronous motion of the radiation source device 111 and the detector array 112, in the present embodiment, the container CT inspection system 100 includes a detection device configured to detect the motion information of the radiation source device 111 or the detector array 112. The first driving device or the second driving device carries out actions according to the detection information of the detection device.

In the present embodiment, the container CT inspection system 100 further includes a controller. The detection device, the first driving device and the second driving device are connected with the controller. The controller controls the first driving device to drive the radiation source device 111 to move according to the detection information or the controller controls the second driving device to drive the detector array 112 to move according to the detection information. For example, the motion information of the radiation source device 111 is detected, so that the second driving device controls the motion of the detector array 112 according to the motion information of the radiation source device 111 to realize the synchronization of the two components.

In the present embodiment, preferably, the detection device includes a first sensor configured to detect the position of the radiation source device 111 and a second sensor configured to detect the position of the detector array 112. The controller controls the first driving device to drive the radiation source device 111 to move according to the detection information sent by the first sensor, and controls the second driving device to drive the detector array 112 to move according to the detection information sent by the second sensor. The first sensor can be arranged on the first rail 113, and the second sensor can be arranged on the second rail 114. The setting can enable the radiation source device 111 and the detector array 112 to realize synchronous motion more accurately.

According to the claimed invention, the first rail 113 is fixedly arranged, the radiation source device 111 swings to and fro along the first rail 113 , meanwhile, the second rail 114 is fixedly arranged, and the detector array 112 swings to and fro along the second rail 114 together with the radiation source device 111. The radiation source device 111 performs no circumferential rotation, so the cables and pipelines of the radiation source device 111 can be connected easily, and it is possible to arrange a high voltage power supply and a water chilling unit in the auxiliary equipment at the outside of the scanning device 110.

As shown in Fig. 2, in the present embodiment, preferably, the first rail 113 is an arc-shaped rail with an opening on the bottom. Since the first rail 113 is set to be arc-shaped, the total height of the scanning device 110 is reduced compared with that in the prior art, when the scanning device is arranged, only a shallower pit needs to be dug, so that both the material cost and the installation cost can be reduced. In other embodiments of the present invention, the first rail 113 can also be set as an annular rail.

In the present embodiment, the radiation source device 111 includes a first radiation source 1111 and a second radiation source 1112, which are arranged along the first rail 113 at intervals, and the first radiation source 1111 and second radiation source 1112 swing synchronously. The manner of setting two radiation sources can reduce the motion amplitude of the radiation source device 111 and is also beneficial for the container CT inspection system to carry out double-view angle perspective inspection.

Of course, the radiation source device of the present invention can also just include one radiation source or can include three or more than three radiation sources, and the plurality of radiation sources move synchronously.

Preferably, when the radiation source device includes more than two radiation sources, emission time of each of the plurality of radiation sources is different from emission time of the rest. When the plurality of radiation sources are arranged to emit the rays at the same time, different radiation sources generate mutual interference of the rays. The setting can avoid the mutual interference between different radiation sources.

In the present embodiment, the angle between the first radiation source 1111 and the second radiation source 1112 relative to the center of the first rail 113is in the range of 70° to 130°. The range of the field angle is conducive to guaranteeing that the inspected container is completely scanned.

To better realize the synchronous swing of the first radiation source 1111 and the second radiation source 1112, as shown in Fig. 2, the radiation source device 111 further includes a connecting device 1113, and the first radiation source 1111 and the second radiation source 1112 are fixedly connected by the connecting device 1113.

In addition, as shown in Fig. 2, the container CT inspection system 100 further includes a buffer device 120. The buffer device 120 includes a first elastic device 121 and a second elastic device 122, which are respectively arranged on two bottommost ends of a motion path of the radiation source device 111. The first elastic device 121 and the second elastic device 122 are configured to decelerate the radiation source device 111 that moves toward the same and propelling the radiation source device 111 to accelerate reversely. On the one hand, when the radiation source device 111 moves to the bottommost end of the motion path thereof, the radiation source device 111 can be buffered, and on the other hand, the energy necessary for driving the radiation source device 111 to swing can be saved.

In the present embodiment, the first elastic device 121 is arranged at the bottommost end of the motion path of the first radiation source 1111, and the second elastic device 122 is arranged at the bottommost end of the motion path of the second radiation source 1112. Specifically, in the present embodiment, the first elastic device 121 includes a first spring 1211, and the second elastic device 122 includes a second spring 1221. In order that the first spring 1211 and the second spring 1221 are placed safely and stably, the first elastic device 121 further includes a first spring seat arranged on the ground and configured to place the first spring 1211, and the second elastic device 122 further includes a second spring seat arranged on the ground and configured to place the second spring 1221.

In other embodiments, the first elastic device or the second elastic device can also include an air cushion, a hydro-pneumatic cylinder or other elastic elements.

Preferably, the radiation source device 111 can emit rays with different energy. For example, in the present embodiment, both the first radiation source 1111 and the second radiation source 1112 can emit rays with different energy. The setting is conducive to identifying the substance in the inspected container to detect the inspected container more clearly.

As shown in Fig. 2, in the present embodiment, the radiation source device 111 can be an electronic accelerator. The container CT inspection system 100 further includes auxiliary equipment 130 connected with the radiation source device 111. The auxiliary equipment 130 includes a high voltage power supply and a water chilling unit, and the auxiliary equipment 130 is arranged at the outside of the scanning device 110. The auxiliary equipment 130 of the radiation source device is arranged at the outside of the scanning device 110 to further relieve the weights of the components that are arranged on the first rail 113 in the scanning device 110 and needs to be rotated, thereby relieving the burden of the first rail 113 and the corresponding first driving device. The solution is implemented more easily, and the cost is lower.

In the present embodiment, both the first radiation source 1111 and the second radiation source 1112 are electronic accelerators. The auxiliary equipment 130 includes first auxiliary equipment 131 for the first radiation source 1111 and second auxiliary equipment 132 for the second radiation source 1112. The first auxiliary equipment 131 and the second auxiliary equipment 132 respectively include the high voltage power supply and the water chilling unit. The high voltage power supply and the water chilling unit in the first auxiliary equipment 131 are connected with the first radiation source 1111 by cables and pipelines. The high voltage power supply and the water chilling unit in the second auxiliary equipment 132 are connected with the second radiation source 1112 by cables and pipelines. The first auxiliary equipment 131 and the second auxiliary equipment 132 are fixed, and the radiation source device 111 and the detector array 112 are respectively driven by the first driving device and the second driving device to move on the respective rails.

To arrange the inspected container on a suitable scanning position, the container CT inspection system 100 further includes a traction device 150 configured to convey the inspected container. The traction device 150 passes through the interiors of the first rail 113 and the second rail 114 and has intervals with the motion paths of the radiation source device 111 and the detector array 112. In the present embodiment, since the second rail 114 is the inner rail, the internal area of the second rail 114 is a scanning channel. A truck loading the inspected container is dragged by the traction device 150 to move back and forth in the scanning channel.

In addition, the container CT inspection system 100 further includes a control room 160. The control room 160 can realize remote control of the radiation source device 111 and the detector array 112 and other moving components, data collection of the detector array 112 and other functions, and the controller can be arranged in the control room 160.

The working process of the container CT inspection system 100 in the present embodiment will be described below.

As shown in Fig. 2, in a scanning process, the second radiation source 1112 of the radiation source device 111 moves to a position B near the upper side of the inspected container at first and is locked, at this time, the first radiation source 1111 of the radiation source device 111 is located on a position A of a side of the inspected container. The traction device 150 drags the inspected container to move in the scanning channel, and the container CT inspection system 100 can carry out double-view angle perspective inspection on the inspected container at the moment to obtain perspective images of two surfaces. When a suspicious item is found according to the perspective images, an operator can mark areas requiring further CT scanning on the perspective images. Then the traction device 150 will automatically drag the inspected container backward to align an X ray beam surface to starting positions of the areas requiring further CT scanning, and then the CT scanning starts.

In the CT scanning process, the radiation source device 111 moves along the first rail 113, and the first radiation source 1111 and the second radiation source 1112 start to emit beams, wherein the first radiation source 1111 and the second radiation source 1112 emit the rays at different times to avoid interference. The detector array 112 moves along the second rail 114 together with the radiation source device 111. When the first radiation source 1111 moves from a position A to a position B, and the second radiation source 1112 moves from the position B to a position C, the tomography of one section of the inspected container is completed. In a process that the second radiation source 1112 is decelerated by the second elastic device 122 near the position C and then is accelerated reversely, the traction device 150 drags the inspected container to move by a very small distance and then stops, so that the X ray beams align to the next scanned section of the inspected container. When the first radiation source 1111 returns from the position B to the position A, and the second radiation source 1112 returns from the position C to the position B, the tomography of the next section of the inspected container is completed. The radiation source device 111 swings in this way, and meanwhile, the traction device 150 drags the inspected container to discontinuously move until all the marked areas requiring the CT scanning are completely scanned.

It can be seen from the above description that, in the above embodiment of the present invention, the radiation source device and the detector array are arranged on two rails, which are respectively arranged on outer layer and inner layer, and unidirectional rotation scanning is further replaced by swing scanning. The embodiment of the present invention can achieve the following technical effects:
1. Since the radiation source device and the detector array are arranged on the first rail and the second rail, which are respectively arranged on outer layer and inner layer, the burden of each single rail can be relieved, and the container CT inspection system is implemented more easily.
2. Since the first rail is set as the arc-shaped rail, the total height of the scanning device is reduced, and only a shallower pit needs to be drug, so that the cost can be reduced.
3. The radiation source device and the detector array perform no circumferential rotation and only swing, therefore the cables and the pipelines can be connected easily.
4. The first rail and the second rail are fixedly arranged, compared with the ring-shaped rotating frame with a large diameter and a heavy weight in the prior art, the weights of the moving components are small, the solution is implemented more easily, and the cost is low.
5. The auxiliary equipment is arranged at the outside for solving the installation problem of the high voltage power supplies and the water chilling units and reducing the requirements on the rails and the driving devices.

## Claims

1. A container CT inspection system (100), comprising a scanning device (110), wherein the scanning device (110) comprises a radiation source device (111) and a detector array (112), wherein the scanning device (110) further comprises a first rail (113) and a second rail (114) which are respectively arranged on outer layer and inner layer, the radiation source device (111) is arranged on the first rail (113), and the detector array (112) is arranged on the second rail (114); wherein the first rail (113) is fixedly arranged, the radiation source device (111) is configured to swing to and fro along the first rail (113); the second rail (114) is fixedly arranged, and the detector array (112) is configured to swing to and fro along the second rail (114) together with the radiation source device (111) ; and wherein the radiation source device (111) and the detector array (112) are configured to move synchronously and are free of rigid connection with each other.

2. The container CT inspection system (100) of claim 1, wherein the container CT inspection system (100) comprises a first driving device configured to drive the radiation source device (111) to move and a second driving device configured to drive the detector array (112) to move.

3. The container CT inspection system (100) of claim 2, wherein the first driving device is arranged on the first rail (113) or the radiation source device (111), and/or the second driving device is arranged on the second rail (114) or the detector array (112).

4. The container CT inspection system (100) of claim 2, wherein the container CT inspection system (100) comprises a controller and a detection device configured to detect motion information of the radiation source device (111) or the detector array (112), the detection device, the first driving device and the second driving device are connected with the controller, wherein the controller is configured to control the first driving device to drive the radiation source device (111) to move according to the detection information or the controller is configured to control the second driving device to drive the detector array (112) to move according to the detection information.

5. The container CT inspection system (100) of claim 4, wherein the detection device comprises a first sensor configured to detect the position of the radiation source device (111) and a second sensor configured to detect the position of the detector array (112), the controller is configured to control the first driving device to drive the radiation source device (111) to move according to the detection information sent by the first sensor, and to control the second driving device to drive the detector array (112) to move according to the detection information sent by the second sensor.

6. The container CT inspection system (100) of claim 1, wherein the first rail (113) is an arc-shaped rail with an opening on the bottom or an annular rail.

7. The container CT inspection system (100) of any one of claims 1-6, wherein the radiation source device (111) comprises a plurality of radiation sources arranged along the first rail (113) at intervals, and the plurality of radiation sources are configured to carry out synchronous motion.

8. The container CT inspection system (100) of claim 7, wherein emission time of each of the plurality of radiation sources is different from emission time of the rest.

9. The container CT inspection system (100) of claim 7, wherein the plurality of radiation sources comprise a first radiation source (1111) and a second radiation source (1112), the radiation source device (111) further comprises a connecting device (1113), and the first radiation source (1111) and the second radiation source (1112) are fixedly connected by the connecting device (1113).

10. The container CT inspection system (100) of claim 9, wherein the angle between the first radiation source (1111) and the second radiation source (1112) relative to the center of the first rail (113) is in the range of 70° to 130°.

11. The container CT inspection system (100) of claim 1 or 6, wherein the container CT inspection system (100) further comprises a buffer device (120), and the buffer device (120) comprises a first elastic device (121) and a second elastic device (122), which are respectively arranged on two bottommost ends of motion path of the radiation source device (111).

12. The container CT inspection system (100) of any one of claims 1-6, wherein the radiation source device (111) is configured to emit rays with different energy.

13. The container CT inspection system (100) of any one of claims 1-6, wherein the container CT inspection system (100) further comprises auxiliary equipment (130) connected with the radiation source device (111), the auxiliary equipment (130) comprises a high voltage power supply and/or a water chilling unit, and the auxiliary equipment (130) is arranged at the outside of the scanning device (110).

14. The container CT inspection system (100) of any one of claims 1-6, wherein the container CT inspection system (100) further comprises a traction device (150) configured to convey an inspected container, and the traction device (150) is configured to pass through the interiors of the first rail (113) and the second rail (114) and has intervals with the motion paths of the radiation source device (111) and the detector array (112).

15. The container CT inspection system (100) of any one of claims 1-6, wherein the rail side of the first rail (113) and the rail side of the second rail (114) are located on two concentric circles.

## Patentansprüche

1. Container-CT-Inspektionssystem (100), umfassend eine Scanvorrichtung (110), wobei die Scanvorrichtung (110) eine Strahlungsquellenvorrichtung (111) und eine Detektoranordnung (112) umfasst, wobei die Scanvorrichtung (110) des Weiteren eine erste Schiene (113) und eine zweite Schiene (114) umfasst, die jeweils auf einer äußeren Schicht bzw. inneren Schicht angeordnet sind, wobei die Strahlungsquellenvorrichtung (111) auf der ersten Schiene (113) angeordnet ist und die Detektoranordnung (112) auf der zweiten Schiene (114) angeordnet ist; wobei die erste Schiene (113) fest angeordnet ist, die Strahlungsquellenvorrichtung (111) ausgelegt ist, um entlang der ersten Schiene (113) hin und her zu pendeln; die zweite Schiene (114) fest angeordnet ist und die Detektoranordnung (112) ausgelegt ist, um zusammen mit der Strahlungsquellenvorrichtung (111) entlang der zweiten Schiene (114) hin und her zu pendeln; und wobei die Strahlungsquellenvorrichtung (111) und die Detektoranordnung (112) ausgelegt sind, um sich synchron zu bewegen, und frei von einer starren Verbindung miteinander sind.

2. Container-CT-Inspektionssystem (100) nach Anspruch 1, wobei das Container-CT-Inspektionssystem (100) eine erste Antriebsvorrichtung, die ausgelegt ist, um die Strahlungsquellenvorrichtung (111) zu einer Bewegung anzutreiben, und eine zweite Antriebsvorrichtung, die ausgelegt ist, um die Detektoranordnung (112) zu einer Bewegung anzutreiben, umfasst.

3. Container-CT-Inspektionssystem (100) nach Anspruch 2, wobei die erste Antriebsvorrichtung an der ersten Schiene (113) oder der Strahlungsquellenvorrichtung (111) angeordnet ist und/oder die zweite Antriebsvorrichtung an der zweiten Schiene (114) oder der Detektoranordnung (112) angeordnet ist.

4. Container-CT-Inspektionssystem (100) nach Anspruch 2, wobei das Container-CT-Inspektionssystem (100) eine Steuerung und eine Erfassungsvorrichtung umfasst, die ausgelegt ist, um Bewegungsinformationen der Strahlungsquellenvorrichtung (111) oder der Detektoranordnung (112) zu erfassen, wobei die Erfassungsvorrichtung, die erste Antriebsvorrichtung und die zweite Antriebsvorrichtung mit der Steuerung verbunden sind, wobei die Steuerung ausgelegt ist, um die erste Antriebsvorrichtung zu steuern, um die Strahlungsquellenvorrichtung (111) zum Bewegen gemäß den Erfassungsinformationen anzutreiben, oder die Steuerung ausgelegt ist, um die zweite Antriebsvorrichtung zu steuern, um die Detektoranordnung (112) zum Bewegen gemäß den Erfassungsinformationen anzutreiben.

5. Container-CT-Inspektionssystem (100) nach Anspruch 4, wobei die Erfassungsvorrichtung einen ersten Sensor, der zum Erfassen der Position der Strahlungsquellenvorrichtung (111) ausgelegt ist, und einen zweiten Sensor, der zum Erfassen der Position der Detektoranordnung (112) ausgelegt ist, umfasst, wobei die Steuerung ausgelegt ist, um die erste Antriebsvorrichtung zu steuern, um die Strahlungsquellenvorrichtung (111) zum Bewegen gemäß den durch den ersten Sensor gesendeten Erfassungsinformationen anzutreiben, und die zweite Antriebsvorrichtung zu steuern, um die Detektoranordnung (112) zum Bewegen gemäß durch den zweiten Sensor gesendeten Erfassungsinformationen anzutreiben.

6. Container-CT-Inspektionssystem (100) nach Anspruch 1, wobei die erste Schiene (113) eine bogenförmige Schiene mit einer Öffnung an der Unterseite oder eine ringförmige Schiene ist.

7. Container-CT-Inspektionssystem (100) nach einem der Ansprüche 1 bis 6, wobei die Strahlungsquellenvorrichtung (111) eine Vielzahl von Strahlungsquellen umfasst, die entlang der ersten Schiene (113) in Abständen angeordnet sind, und wobei die Vielzahl von Strahlungsquellen ausgelegt sind, um eine synchrone Bewegung auszuführen.

8. Container-CT-Inspektionssystem (100) nach Anspruch 7, wobei die Emissionszeit jeder der Vielzahl von Strahlungsquellen sich von der Emissionszeit der übrigen Quellen unterscheidet.

9. Container-CT-Inspektionssystem (100) nach Anspruch 7, wobei die Vielzahl von Strahlungsquellen eine erste Strahlungsquelle (1111) und eine zweite Strahlungsquelle (1112) umfasst, wobei die Strahlungsquellenvorrichtung (111) ferner eine Verbindungsvorrichtung (1113) umfasst, und die erste Strahlungsquelle (1111) und die zweite Strahlungsquelle (1112) durch die Verbindungsvorrichtung (1113) fest verbunden sind.

10. Container-CT-Inspektionssystem (100) nach Anspruch 9, wobei der Winkel zwischen der ersten Strahlungsquelle (1111) und der zweiten Strahlungsquelle (1112) bezogen auf die Mitte der ersten Schiene (113) im Bereich von 70° bis 130° liegt.

11. Container-CT-Inspektionssystem (100) nach Anspruch 1 oder 6, wobei das Container-CT-Inspektionssystem (100) ferner eine Puffervorrichtung (120) umfasst, und die Puffervorrichtung (120) eine erste elastische Vorrichtung (121) und eine zweite elastische Vorrichtung (122) umfasst, die jeweils an den beiden untersten Enden des Bewegungspfades der Strahlungsquellenvorrichtung (111) angeordnet sind.

12. Container-CT-Inspektionssystem (100) nach einem der Ansprüche 1 bis 6, wobei die Strahlenquellenvorrichtung (111) ausgelegt ist, um Strahlen mit unterschiedlicher Energie zu emittieren.

13. Container-CT-Inspektionssystem (100) nach einem der Ansprüche 1 bis 6, wobei das Container-CT-Inspektionssystem (100) ferner mit der Strahlungsquellenvorrichtung (111) verbundene Zusatzeinrichtungen (130) umfasst, wobei die Zusatzeinrichtungen (130) eine Hochspannungsstromversorgung und/oder eine Wasserkühleinheit umfasst und die Zusatzeinrichtungen (130) an der Außenseite der Scanvorrichtung (110) angeordnet sind.

14. Container-CT-Inspektionssystem (100) nach einem der Ansprüche 1 bis 6, wobei das Container-CT-Inspektionssystem (100) ferner eine Zugvorrichtung (150) umfasst, die ausgelegt ist, um einen inspizierten Container zu befördern, und die Zugvorrichtung (150) ausgelegt ist, um durch das Innere der ersten Schiene (113) und der zweiten Schiene (114) zu verlaufen und Abstände zu den Bewegungspfaden der Strahlungsquellenvorrichtung (111) und der Detektoranordnung (112) aufzuweisen.

15. Container-CT-Inspektionssystem (100) nach einem der Ansprüche 1 bis 6, wobei die Schienenseite der ersten Schiene (113) und die Schienenseite der zweiten Schiene (114) sich auf zwei konzentrischen Kreisen befinden.

## Revendications

1. Système d'inspection par tomodensitométrie de conteneur (100), comprenant un dispositif de balayage (110), dans lequel le dispositif de balayage (110) comprend un dispositif de source de rayonnement (111) et un réseau de détecteurs (112), dans lequel le dispositif de balayage (110) comprend en outre un premier rail (113) et un deuxième rail (114), qui sont respectivement agencés sur une couche externe et une couche interne, le dispositif de source de rayonnement (111) est agencé sur le premier rail (113), et le réseau de détecteurs (112) est agencé sur le deuxième rail (114) ; dans lequel le premier rail (113) est agencé fixement, le dispositif de source de rayonnement (111) est configuré pour osciller d'avant en arrière le long du premier rail (113) ; le deuxième rail (114) est agencé fixement, et le réseau de détecteurs (112) est configuré pour osciller d'avant en arrière le long du deuxième rail (114) conjointement avec le dispositif de source de rayonnement (111) ; et dans lequel le dispositif de source de rayonnement (111) et le réseau de détecteurs (112) sont configurés pour se mettre en mouvement de manière synchrone et sont exempts de raccordement rigide l'un avec l'autre.

2. Système d'inspection par tomodensitométrie de conteneur (100) selon la revendication 1, le système d'inspection par tomodensitométrie de conteneur (100) comprenant un premier dispositif d'entraînement configuré pour entraîner le dispositif de source de rayonnement (111) pour qu'il se mette en mouvement et un deuxième dispositif d'entraînement configuré pour entraîner le réseau de détecteurs (112) pour qu'il se mette en mouvement.

3. Système d'inspection par tomodensitométrie de conteneur (100) selon la revendication 2, dans lequel le premier dispositif d'entraînement est agencé sur le premier rail (113) ou le dispositif de source de rayonnement (111), et/ou le deuxième dispositif d'entraînement est agencé sur le deuxième rail (114) ou le réseau de détecteurs (112).

4. Système d'inspection par tomodensitométrie de conteneur (100) selon la revendication 2, le système d'inspection par tomodensitométrie de conteneur (100) comprenant un dispositif de commande et un dispositif de détection configuré pour détecter des informations de mouvement du dispositif de source de rayonnement (111) ou du réseau de détecteurs (112), le dispositif de détection, le premier dispositif d'entraînement et le deuxième dispositif d'entraînement sont raccordés au dispositif de commande, dans lequel le dispositif de commande est configuré pour commander le premier dispositif d'entraînement pour entraîner le dispositif de source de rayonnement (111) pour qu'il se mette en mouvement selon les informations de détection ou le dispositif de commande est configuré pour commander le deuxième dispositif d'entraînement pour entraîner le réseau de détecteurs (112) pour qu'il se mette en mouvement selon les informations de détection.

5. Système d'inspection par tomodensitométrie de conteneur (100) selon la revendication 4, dans lequel le dispositif de détection comprend un premier capteur configuré pour détecter la position du dispositif de source de rayonnement (111) et un deuxième capteur configuré pour détecter la position du réseau de détecteurs (112), le dispositif de commande est configuré pour commander le premier dispositif d'entraînement pour entraîner le dispositif de source de rayonnement (111) pour qu'il se mette en mouvement selon les informations de détection envoyées par le premier capteur, et pour commander le deuxième dispositif d'entraînement pour entraîner le réseau de détecteurs (112) pour qu'il se mette en mouvement selon les informations de détection envoyées par le deuxième capteur.

6. Système d'inspection par tomodensitométrie de conteneur (100) selon la revendication 1, dans lequel le premier rail (113) est un rail en forme d'arc avec une ouverture sur le fond ou un rail annulaire.

7. Système d'inspection par tomodensitométrie de conteneur (100) selon l'une quelconque des revendications 1 à 6, dans lequel le dispositif de source de rayonnement (111) comprend une pluralité de sources de rayonnement agencées le long du premier rail (113) à intervalles, et la pluralité de sources de rayonnement sont configurées pour réaliser un mouvement synchrone.

8. Système d'inspection par tomodensitométrie de conteneur (100) selon la revendication 7, dans lequel un temps d'émission de chacune de la pluralité de sources de rayonnement est différent d'un temps d'émission du reste.

9. Système d'inspection par tomodensitométrie de conteneur (100) selon la revendication 7, dans lequel la pluralité de sources de rayonnement comprennent une première source de rayonnement (1111) et une deuxième source de rayonnement (1112), le dispositif de source de rayonnement (111) comprend en outre un dispositif de raccordement (1113), et la première source de rayonnement (1111) et la deuxième source de rayonnement (1112) sont raccordées fixement par le dispositif de raccordement (1113).

10. Système d'inspection par tomodensitométrie de conteneur (100) selon la revendication 9, dans lequel l'angle entre la première source de rayonnement (1111) et la deuxième source de rayonnement (1112) par rapport au centre du premier rail (113) est dans la plage de 70° à 130°.

11. Système d'inspection par tomodensitométrie de conteneur (100) selon la revendication 1 ou 6, le système d'inspection par tomodensitométrie de conteneur (100) comprend en outre un dispositif tampon (120), et le dispositif tampon (120) comprend un premier dispositif élastique (121) et un deuxième dispositif élastique (122), qui sont respectivement agencés sur les deux extrémités les plus basses de la trajectoire de mouvement du dispositif de source de rayonnement (111).

12. Système d'inspection par tomodensitométrie de conteneur (100) selon l'une quelconque des revendications 1 à 6, dans lequel le dispositif de source de rayonnement (111) est configuré pour émettre des rayons d'énergie différente.

13. Système d'inspection par tomodensitométrie de conteneur (100) selon l'une quelconque des revendications 1 à 6, le système d'inspection par tomodensitométrie de conteneur (100) comprend en outre un équipement auxiliaire (130) raccordé au dispositif de source de rayonnement (111), l'équipement auxiliaire (130) comprend une alimentation électrique haute tension et/ou une unité de refroidissement d'eau, et l'équipement auxiliaire (130) est agencé à l'extérieur du dispositif de balayage (110).

14. Système d'inspection par tomodensitométrie de conteneur (100) selon l'une quelconque des revendications 1 à 6, le système d'inspection par tomodensitométrie de conteneur (100) comprenant en outre un dispositif de traction (150) configuré pour transporter un conteneur inspecté, et le dispositif de traction (150) est configuré pour traverser les intérieurs du premier rail (113) et du deuxième rail (114) et a des intervalles avec les trajectoires de mouvement du dispositif de source de rayonnement (111) et du réseau de détecteurs (112).

15. Système d'inspection par tomodensitométrie de conteneur (100) selon l'une quelconque des revendications 1 à 6, dans lequel le côté rail du premier rail (113) et le côté rail du deuxième rail (114) sont situés sur deux cercles concentriques.
